# EUROPÄISCHE PATENTANMELDUNG

(11) **EP 3 115 851 A1**
(43) Veröffentlichungstag der Anmeldung: **11.01.2017**
(21) Anmeldenummer: 16171217.9
(22) Anmeldetag: 25.05.2016
(51) Int. Cl.: G03H 1/04, G03H 1/02, B23K 26/00

(54) **VERFAHREN ZUR HERSTELLUNG EINES HOLOGRAMMS**

(30) Priorität: 09.07.2015 DE 102015212885
(71) Anmelder: Elsässer, Volker, 72160 Horb am Neckar (DE)
(72) Erfinder: Elsässer, Volker, 72160 Horb am Neckar (DE)
(74) Vertreter: Grauel, Andreas

(57) **Zusammenfassung**

Die Erfindung betrifft ein Verfahren zur Herstellung eines Hologramms auf einer flächigen oder dreidimensional geformten Oberfläche mit den nachfolgenden Schritten:
- Schreiben des Hologramms auf ein Trägermaterial,
- Übertragen des Hologramms von dem Trägermaterial auf eine Matrize,
- Erzeugen einer Folie oder eines Glasträgers mit dem Hologramm von der Matrize,
- Übertragen des Hologramms mittels der Folie oder des Glasträgers auf die flächige oder dreidimensional geformte Oberfläche,
- Metallisieren des Hologramms auf der flächigen oder dreidimensionalen Oberfläche, und
- Überziehen des metallisierten Hologramms mit einem Schutzüberzug.

## Beschreibung

### Technisches Gebiet

Die Erfindung betrifft ein Verfahren zur Herstellung eines Hologramms auf einer flächigen oder dreidimensional geformten Oberfläche.

### Stand der Technik

Oberflächen werden heute in vielfältiger Art bedruckt, wobei dadurch oft nur ein zweidimensionales Bild aufgebracht wird, welches keine besondere Anmutung aufzeigt.

Daher geht es auch bei wertigen Produkten darum, dass das Produkt auch mit einem wertigen Element versehen werden kann. Hierzu sind Hologramme bekannt, welche einen wertigen Eindruck beim Betrachter hinterlassen. Dabei ist das Aufbringen eines Hologramms auf einer beliebig geformten Fläche schwierig, zumal ein dauerhaftes Aufbringen erst den Wertigen Eindruck erzeugt.

### Darstellung der Erfindung, Aufgabe, Lösung, Vorteile

Es ist die Aufgabe der Erfindung, ein Verfahren zu schaffen, welches einfach die Erzeugung eines Hologramms erlaubt, das dauerhaft auf einer flächigen oder dreidimensional geformten Oberfläche haftet. Auch ist es die Aufgabe der Erfindung, ein Oberflächenelement zu schaffen, das mit einem Hologramm versehen ist.

Die Aufgabe zu dem Verfahren wird mit den Merkmalen von Anspruch 1 gelöst.

Ein Ausführungsbeispiel der Erfindung betrifft ein Verfahren zur Herstellung eines Hologramms auf einer flächigen oder dreidimensional geformten Oberfläche mit den nachfolgenden Schritten:
- Schreiben des Hologramms auf ein Trägermaterial,
- Übertragen des Hologramms von dem Trägermaterial auf eine Matrize,
- Erzeugen einer Folie, insbesondere einer Masterfolie, oder eines Glasträgers mit dem Hologramm von der Matrize,
- optional Erzeugen einer Folie als Replikationsfolie mit dem Hologramm von einer Masterfolie,
- Übertragen des Hologramms mittels der Folie oder des Glasträgers auf die flächige oder dreidimensional geformte Oberfläche,
- Metallisieren des Hologramms auf der flächigen oder dreidimensionalen Oberfläche, und
- Überziehen des metallisierten Hologramms mit einem Schutzüberzug.

Dadurch wird auf einfache und reproduzierbare Weise ein Hologramm auf einem Oberflächenelement erzeugt, das optisch hohen Ansprüchen genügt und dauerhaft geschützt ist.

Gemäß dem erfinderischen Gedanken ist es vorteilhaft, wenn das Schreiben des Hologramms mittels eines Energiestrahls erfolgt, wie insbesondere mittels eines Laserstrahls. Dadurch können auch sehr feine Strukturen geschaffen werden, was die optische Qualität des Hologramms verbessert.

Auch ist es vorteilhaft, wenn das Trägermaterial eine Lackschicht oder eine Sputterschicht, insbesondere auf einem Glas und/oder auf einem Silizium-Wafer, ist. Dadurch kann das Trägermaterial kostengünstig zur Verfügung gestellt werden, wobei auf diesem Trägermaterial auch ein exaktes Schreiben von Strukturen des Hologramms möglich ist.

Auch ist es weiterhin vorteilhaft, wenn die Matrize eine Nickelmatrize bzw. ein Nickelstamper ist. Damit lässt sich einfach und kostengünstig die gewünschte Struktur erzeugen.

Auch ist es besonders vorteilhaft, wenn die Folie mittels UV-Lack erzeugt wird. Dieser Lack ist UV-Licht aushärtbar, was eine gezielte und zeitsparende Verarbeitung ermäglicht.

Besonders vorteilhaft ist es, wenn das Übertragen des Hologramms mittels der Folie auf die flächige oder dreidimensional geformte Oberfläche mittels eines Nassprägeprozesses erfolgt. Dadurch kann die Struktur des Hologramms detailgetreu übertragen werden.

So ist es auch vorteilhaft, wenn die Hologrammstruktur von der Folie auf einem auf der Oberfläche aufgetragenen Lack eingeprägt und anschließend ausgehärtet wird.

Besonders vorteilhaft ist es, wenn das Metallisieren mittels eines Sputterverfahrens, wie eines PVD-Sputterverfahrens, vorgenommen wird. Dadurch kann ein Metallisieren der Hologrammstruktur auch in sehr feinen Strukturen vorgenommen werden.

Dabei ist es auch vorteilhaft, wenn die Herstellung der Folie, insbesondere als Replikationsfolie, unter Erzeugung einer Masterfolie erfolgt, die aufgehend von der Matrize erzeugt wird und die Folie mittels der Masterfolie erzeugt wird.

Die Aufgabe zu dem Oberflächenelement wird mit den Merkmalen von Anspruch 10 gelöst.

Ein Ausführungsbeispiel der Erfindung betrifft ein Oberflächenelement mit einem aufgebrachten Hologramm, welches mittels eines Verfahrens nach dem erfindungsgemäßen Verfahren auf die Oberfläche aufgebracht ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigt:
- Figur 1: ein Blockschaltbild zur Erläuterung des erfindungsgemäßen Verfahrens,
- Figur 2: eine Darstellung eines Hologramms auf einem Deckel eines Behältnisses, und
- Figur 3: eine Darstellung mehrerer Hologramme auf einem Deckel eines Behältnisses.

### Bevorzugte Ausführung der Erfindung

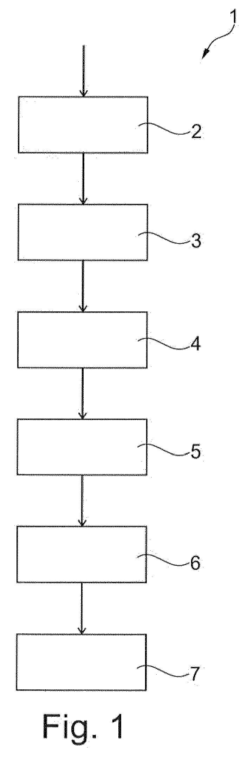

Die Figur 1 zeigt ein Blockschaltbild 1 zur Erläuterung des erfindungsgemäßen Verfahrens zur Herstellung eines Hologramms auf einer flächigen oder dreidimensional geformten Oberfläche eines Oberflächenelements. Das erfindungsgemäße Verfahren weist eine Mehrzahl von Verfahrensschritten auf, die nachfolgend erläutert werden:
Es soll ein Hologramm auf einer Oberfläche eines Oberflächenelements, wie eines Bauteils, aufgebracht werden.

In Block 2 wird als erster Schritt ein Hologramm auf ein Trägermaterial geschrieben. Dieses Schreiben erfolgt vorteilhaft mittels eines Laserstrahls oder eines anderen Energiestrahls. Dazu kann vorteilhaft ein Laserstrahlrecorder eingesetzt werden. Aufgrund der Struktur des Hologramms wird dabei der Laserstrahl gesteuert, damit mittels des Laserstrahls die Struktur des Hologramms auf das Trägermaterial geschrieben wird, auch wenn die Struktur des Hologramms sehr fein ist. Als Trägermaterial wird dabei eine Lackschicht oder eine Sputterschicht, insbesondere auf einem Glas und/oder auf einem Silizium-Wafer, vorgesehen.

In Block 3 erfolgt als zweiter Schritt das Übertragen des Hologramms von dem Trägermaterial auf eine Matrize. Die Matrize ist dabei bevorzugt eine Nickelmatrize bzw. ein Nickelstamper.

In Block 4 wird als dritter Schritt eine Folie mit dem Hologramm von der Matrize erzeugt. Dabei wird die Folie vorteilhaft mittels eines UV-Lacks erzeugt. Dieser härtet unter UV-Lichtbestrahlung aus. Dabei wird zuerst eine Masterfolie erzeugt, von welcher dann die Folie als Replikationsfolie erzeugt wird, welche zum weiteren Erzeugen des Hologramms nachfolgend verwendet wird.

Statt der Verwendung einer Folie bzw. Masterfolie kann auch ein Glasträger verwendet werden, welcher beispielsweise mittels Glasedging bearbeitet wird.

In Schritt 5 erfolgt als vierter Schritt das Übertragen des Hologramms mittels der Folie auf die flächige oder dreidimensional geformte Oberfläche des Oberflächenelements. Dazu wird zum Übertragen vorteilhaft ein Nassprägeprozess verwendet. Die Hologrammstruktur auf der Masterfolie wird in einen UV-Lack als Replikationslack reingeprägt und anschließend ausgehärtet. Das Oberflächenelement ist dabei beispielsweise eine Kappe, ein Deckel etc.

In Schritt 6 erfolgt als fünfter Schritt ein Metallisieren des Hologramms auf der flächigen oder dreidimensionalen Oberfläche. Dies erfolgt vorteilhaft mittels eines PVD-Sputterverfahrens, bei welchem metallisches Material dünnschichtig aufgetragen wird. Alternativ kann beispielsweise auch ein anderes Sputterverfahren oder Auftrageverfahren angewendet werden.

In Schritt 7 erfolgt als sechster Schritt ein Überziehen des metallisierten Hologramms mit einem Schutzüberzug, wie mit einem Schutzlack.

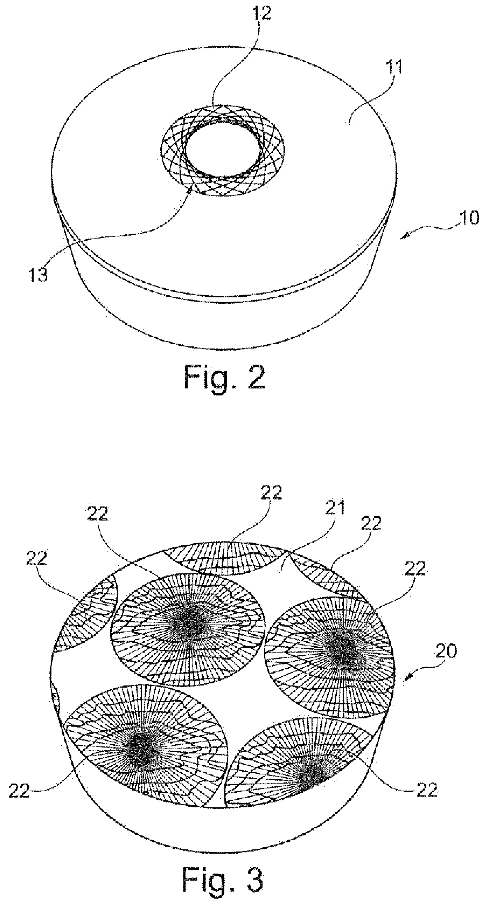

Die Figuren 2 und 3 zeigen Behältnisse 10, 20, wie Kosmetiktöpfe, mit einem Deckel 11, 21, die mit unterschiedlichen Hologrammen 12, 22 versehen sind.

Das Ausführungsbeispiel der Figur 2 zeigt auf dem Deckel 11 mittig aufgebrachtes ringförmiges Hologramm 12. Dabei ist auch zu erkennen, dass in dem Hologramm 12 integriert ein Sicherheitsmerkmal, wie beispielsweise ein Nanotext oder eine anderweitige grafische Gestaltung, vorliegen kann. Im Beispiel der Figur 2 ist ein Buchstabe "E", siehe Pfeil 13, zu erkennen. Die Oberfläche des Deckels ist gewölbt. Die Metallisierung ist vorteilhaft nicht nur im Bereich des Hologramms, sonder auf dem gesamten Deckel als dreidimensional geformte Oberfläche vorgesehen.

Das Ausführungsbeispiel der Figur 3 zeigt auf dem Deckel 21 verteilt aufgebrachte kreisförmige Hologramme 22. In die Hologramme 22 können ebenso Sicherheitsmerkmale integriert sein, wie beispielsweise ein Nanotext oder eine anderweitige grafische Gestaltung. Die Oberfläche des Deckels 21 ist ebenso gewölbt. Die Metallisierung ist vorteilhaft nicht nur im Bereich des Hologramms 22, sonder auf dem gesamten Deckel 21 als dreidimensional geformte Oberfläche vorgesehen.

Die dreidimensional geformte Oberfläche kann jedoch auch anderweitig ausgebildet sein.

### Bezugszeichenliste

- 1: Blockdiagramm
- 2: Block
- 3: Block
- 4: Block
- 5: Block
- 6: Block
- 7: Block
- 10: Behältnis
- 11: Deckel
- 12: Hologramm
- 13: Sicherheitsmerkmal, Pfeil
- 20: Behältnis
- 21: Deckel
- 22: Hologramm

## Patentansprüche

1. Verfahren zur Herstellung eines Hologramms auf einer flächigen oder dreidimensional geformten Oberfläche mit den nachfolgenden Schritten:
- Schreiben des Hologramms auf ein Trägermaterial,
- Übertragen des Hologramms von dem Trägermaterial auf eine Matrize,
- Erzeugen einer Folie oder eines Glasträgers mit dem Hologramm von der Matrize,
- Übertragen des Hologramms mittels der Folie oder eines Glasträgers auf die flächige oder dreidimensional geformte Oberfläche,
- Metallisieren des Hologramms auf der flächigen oder dreidimensionalen Oberfläche, und
- Überziehen des metallisierten Hologramms mit einem Schutzüberzug.

2. Verfahren nach Anspruch 1, **dadurch gekennzeichnet, dass** das Schreiben des Hologramms mittels eines Energiestrahls erfolgt, wie insbesondere mittels eines Laserstrahls.

3. Verfahren nach Anspruch 1 oder 2, **dadurch gekennzeichnet, dass** das Trägermaterial eine Lackschicht oder eine Sputterschicht, insbesondere auf einem Glas und/oder auf einem Silizium-Wafer, ist.

4. Verfahren nach Anspruch 1 bis 3, **dadurch gekennzeichnet, dass** die Matrize eine Nickelmatrize bzw. ein Nickelstamper ist.

5. Verfahren nach einem der vorhergehenden Ansprüche, **dadurch gekennzeichnet, dass** die Folie mittels UV-Lack erzeugt wird.

6. Verfahren nach einem der vorhergehenden Ansprüche, **dadurch gekennzeichnet, dass** das Übertragen des Hologramms mittels der Folie auf die flächige oder dreidimensional geformte Oberfläche mittels eines Nassprägeprozesses erfolgt.

7. Verfahren nach Anspruch 6, **dadurch gekennzeichnet, dass** die Hologrammstruktur von der Folie oder des Glasträgers auf einem auf der Oberfläche aufgetragenen Lack eingeprägt und anschließend ausgehärtet wird.

8. Verfahren nach einem der vorhergehenden Ansprüche, **dadurch gekennzeichnet, dass** das Metallisieren mittels eines Sputterverfahrens, wie eines PVD-Sputterverfahrens, vorgenommen wird.

9. Verfahren nach einem der vorhergehenden Ansprüche, **dadurch gekennzeichnet, dass** die Herstellung der Folie unter Erzeugung einer Masterfolie erfolgt, die aufgehend von der Matrize erzeugt wird und die Folie mittels der Masterfolie erzeugt wird.

10. Oberflächenelement mit einem aufgebrachten Hologramm, welches mittels eines Verfahrens nach zumindest einem der vorhergehenden Ansprüche auf die Oberfläche aufgebracht ist.
